# FASCICULE DE BREVET EUROPEEN

(11) **EP 1 685 025 B1**
(45) Date de publication et mention de la délivrance du brevet: **04.07.2007**
(21) Numéro de dépôt: 03786048.3
(22) Date de dépôt: 21.11.2003
(51) Int. Cl.: B64D 33/10

(54) **SYSTEME DE REFROIDISSEMENT D'UN AERONEF ET AERONEF EQUIPE D'UN TEL SYSTEME**
FLUIDKÜHLSYSTEM FÜR FLUGZEUGE UND FLUGZEUG AUSGESTATTET MIT EINEM SOLCHEN SYSTEM
AIRCRAFT FLUID COOLING SYSTEM AND AN AIRCRAFT PROVIDED WITH SAID SYSTEM

(43) Date de publication de la demande: 02.08.2006
(73) Titulaire: Airbus, 31707 Blagnac (FR)
(72) Inventeur: MAHJOUB, Fares, F-31200 TOULOUSE (FR)
(74) Mandataire: Poulin, Gérard
(86) Numéro de dépôt international: PCT/FR2003/003450
(87) Numéro de publication internationale: WO 2005/061323

(56) Documents cités:
- EP-A- 0 469 825
- DE-C- 738 758

## Description

### DOMAINE TECHNIQUE

L'invention concerne un système de refroidissement d'un fluide d'un aéronef, notamment d'un fluide hydraulique circulant à bord de cet aéronef, ledit fluide hydraulique étant destiné à alimenter un ou plusieurs actionneurs hydrauliques. L'invention concerne également un aéronef équipé d'un tel système de refroidissement d'un fluide, notamment un fluide hydraulique circulant à bord de cet aéronef.

### ETAT DE LA TECHNIQUE ANTERIEURE

Dans un aéronef, on rencontre généralement un ou plusieurs circuits de fluide hydraulique, destinés à alimenter un ou plusieurs actionneurs hydrauliques tels que, par exemple, des moteurs hydrauliques, ou des servo-commandes, ou des pistons, etc. Dans la suite de la description, un tel actionneur hydraulique qui est alimenté en fluide hydraulique, ou qui « consomme » de l'énergie provenant du fluide hydraulique, sera appelé « appareil consommateur » ou simplement « consommateur ».

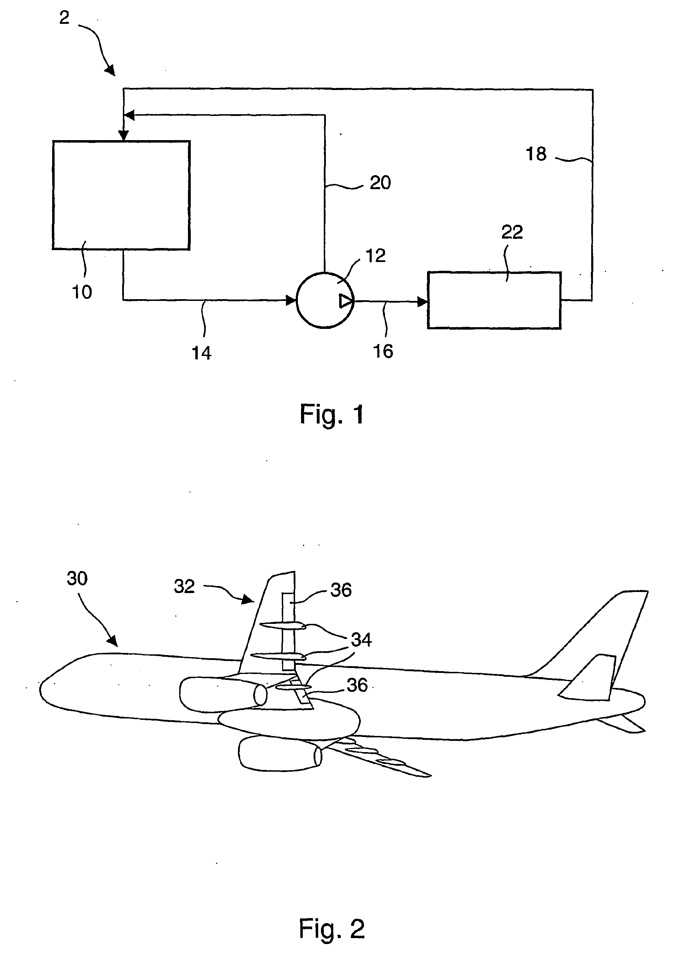

La figure 1 représente un circuit de fluide hydraulique conventionnel repéré par la référence numérique 2. Il comprend, de manière connue en soi, un réservoir de fluide hydraulique 10, une ou plusieurs pompes hydrauliques 12, et des canalisations 14, 16, 18, 20.

Le principe de fonctionnement d'un tel circuit va être brièvement rappelé, dans un cas particulier où le circuit alimente un seul consommateur 22, étant entendu qu'un circuit alimentant plusieurs consommateurs 22 fonctionne selon un principe analogue. La pompe hydraulique 12 est une pompe haute pression qui pompe ou aspire du fluide hydraulique à partir du réservoir 10 au travers d'une première canalisation dite canalisation d'aspiration de fluide 14. Le fluide hydraulique est ensuite envoyé, sous haute pression, vers un consommateur 22 au travers d'une deuxième canalisation dite canalisation d'alimentation en fluide 16. La consommation d'énergie par ledit consommateur 22 se traduit par une diminution de la pression du fluide hydraulique, qui se trouve à basse pression en sortie du consommateur, dans une troisième canalisation dite canalisation de retour de fluide 18, au travers de laquelle il est renvoyé vers le réservoir de fluide hydraulique 10.

Le circuit de fluide hydraulique comprend généralement une canalisation supplémentaire, appelée canalisation de drainage 20, associée à la pompe hydraulique. Celle-ci permet de renvoyer directement vers le réservoir 10 une partie du fluide hydraulique provenant de la pompe hydraulique 12 et correspondant aux fuites internes de cette pompe 12. Classiquement, il est estimé qu'environ 10% à 15% de la puissance totale disponible aux pompes est perdue du fait de l'existence de ces fuites internes, et que cette fraction de puissance est transformée en chaleur. Il en résulte un échauffement du fluide hydraulique circulant dans la canalisation de drainage 20 en direction du réservoir de fluide hydraulique 10.

Les consommateurs de fluide hydraulique peuvent également échauffer ledit fluide hydraulique, généralement à un degré moindre que les pompes.

De tels échauffements du fluide hydraulique ont des répercussions néfastes pour le fonctionnement du circuit hydraulique. En effet, il résulte de ces échauffements une dégradation du fluide hydraulique, et donc une diminution de ses performances. En particulier, un échauffement du fluide peut induire une augmentation de l'acidité dudit fluide, ce qui peut provoquer des détériorations des appareils consommateurs dudit fluide hydraulique. Il peut également résulter de ces échauffements une dégradation des joints du circuit hydraulique, et par suite des fuites externes du circuit hydraulique.

Il est donc nécessaire de maintenir le fluide hydraulique, circulant dans un tel circuit hydraulique destiné à alimenter un ou des consommateurs, au-dessous d'une température dite température de stabilité dudit fluide hydraulique.

Une première solution consiste à utiliser la capacité naturelle du circuit hydraulique à dissiper la chaleur par convection naturelle ou forcée avec l'air ambiant se trouvant autour des canalisations. Cette première solution donne satisfaction pour des aéronefs dont les besoins en puissance hydraulique sont suffisamment faibles pour qu'une telle dissipation de chaleur par les canalisations d'alimentation en fluide dissipe totalement ou quasi-totalement l'échauffement du fluide hydraulique. La dissipation est d'autant plus efficace que les canalisations d'alimentation sont longues. Mais pour des aéronefs qui sont compacts au regard de la puissance hydraulique installée, c'est-à-dire qui comportent une faible longueur de canalisations d'alimentation en comparaison de la puissance hydraulique disponible, la dissipation naturelle de chaleur reste insuffisante.

Une deuxième solution améliorant le refroidissement du fluide hydraulique consiste à compléter le circuit hydraulique par un échangeur de chaleur placé à l'intérieur d'un réservoir de carburant de l'aéronef. Le fluide hydraulique traverse cet échangeur de chaleur, il est alors refroidi, et sa chaleur est transférée au carburant contenu dans le réservoir de carburant accueillant l'échangeur de chaleur. Cette deuxième solution a pu être utilisée sur des aéronefs anciens, mais elle n'est plus acceptable depuis l'entrée en vigueur de nouvelles réglementations en matière -de sécurité, qui imposent de minimiser tous les transferts thermiques vers le carburant. Une première condition requise par les réglementations préconise de limiter la génération de vapeur de carburant à l'intérieur de chaque réservoir de carburant. Ceci est réalisé si la température du carburant reste inférieure à sa température de flammabilité T_{F}. Une deuxième condition requise par les réglementations impose que la température T_{M} du carburant à l'entrée des moteurs ne dépasse pas une valeur maximale. Par conséquent cette deuxième solution ne peut plus être mise en oeuvre, car elle ne permet pas de maîtriser la température du carburant, que ce soit à l'intérieur des réservoirs de carburant ou à l'entrée des moteurs, et par conséquent les deux conditions réglementaires ne sont pas respectées.

Le document EP 0 469 825 décrit un échangeur de chaleur à air placé dans un pylône d'un moteur d'un avion.

### EXPOSE DE L'INVENTION

L'invention a précisément pour objet un système de refroidissement d'un fluide d'un aéronef qui résout les problèmes posés par les systèmes de l'art antérieur. Conformément à l'invention, ce système comporte un échangeur de chaleur à air, traversé par le fluide à refroidir, ledit échangeur de chaleur à air comprenant un moyen d'introduction d'air et un moyen d'évacuation d'air, l'échangeur de chaleur à air étant implanté dans un logement situé dans un carénage de rail de guidage de volets associés à une aile de cet aéronef, ledit moyen d'introduction d'air dans l'échangeur de chaleur à air étant raccordé à un moyen d'entrée d'air traversant le revêtement extérieur du carénage et ledit moyen d'évacuation d'air de cet échangeur de chaleur à air étant raccordé à un moyen de sortie d'air débouchant à l'extérieur dudit revêtement extérieur de façon à ce que de l'air extérieur à l'aéronef traverse cet échangeur à air pour refroidir ledit fluide.

Ce dispositif de refroidissement d'un fluide d'un aéronef permet d'évacuer la chaleur issue du refroidissement dudit fluide vers de l'air extérieur à cet aéronef. Il profite pour cela de l'écoulement dynamique de l'air autour de l'aéronef.

Dans un mode préféré de réalisation, ledit moyen d'entrée d'air traversant le revêtement extérieur du carénage correspond à une entrée d'air dynamique. Le terme « entrée d'air dynamique» désigne une entrée d'air permettant de capter au moins une partie de la pression dynamique due au déplacement de l'aéronef dans l'air.

De façon avantageuse, le système de refroidissement d'un fluide d'un aéronef objet de l'invention comporte au moins un ventilateur apte à assurer un débit d'air minimal dans l'échangeur de chaleur à air. Ce ventilateur permet d'assurer et d'améliorer le refroidissement dudit fluide en augmentant le débit d'air dans cet échangeur de chaleur à air, notamment lorsque la vitesse de l'aéronef est nulle (aéronef au sol) ou inférieure à une valeur prédéterminée (par exemple lors des phases de décollage et d'atterrissage). Ce ventilateur peut avantageusement être implanté en amont, selon le sens de circulation de l'air, de l'échangeur de chaleur à air ou en aval de cet. échangeur de chaleur à air.

L'invention concerne également un aéronef équipé d'un tel système de refroidissement d'un fluide de cet aéronef.

### BREVE DESCRIPTION DES DESSINS

D'autres particularités et avantages de l'invention apparaîtront à la lecture de la description qui va suivre de modes de réalisation particuliers de l'invention, en référence aux dessins annexés, dans lesquels :
- la figure 1, déjà décrite, illustre un circuit hydraulique d'alimentation de consommateurs, ainsi que son principe de fonctionnement ;
- la figure 2 illustre, de l'extérieur, un aéronef susceptible de recevoir un système de refroidissement d'un fluide conforme à l'invention ;
- la figure 3 est une vue en coupe d'une aile de l'aéronef de la figure 2 ;
- la figure 4 est une vue en coupe d'une aile d'un aéronef qui illustre, à plus grande échelle, un carénage de rail de guidage de volets dans lequel est implanté un échangeur de chaleur à air, conformément à l'invention ;
- la figure 5 est une vue similaire à celle de la figure 4 qui illustre un mode particulier de réalisation de l'invention dans lequel le système de refroidissement comporte au moins un ventilateur ;
- la figure 6 est une représentation schématique d'un système de commande du ventilateur représenté sur la figure 5 ;
- la figure 7 est une vue en coupe, dans un plan sensiblement horizontal lorsque l'aéronef est posé au sol, d'un carénage de rail de guidage et d'un système de refroidissement selon l'invention qui représente un mode particulier de réalisation du moyen de sortie d'air ;
- les figures 8a, 8b et 8c sont des vues en coupe d'entrées d'air dynamiques ;
- la figure 9 est une vue en coupe d'un conduit divergent comportant un col.

### EXPOSE DETAILLE DE MODES DE REALISATION PREFERES

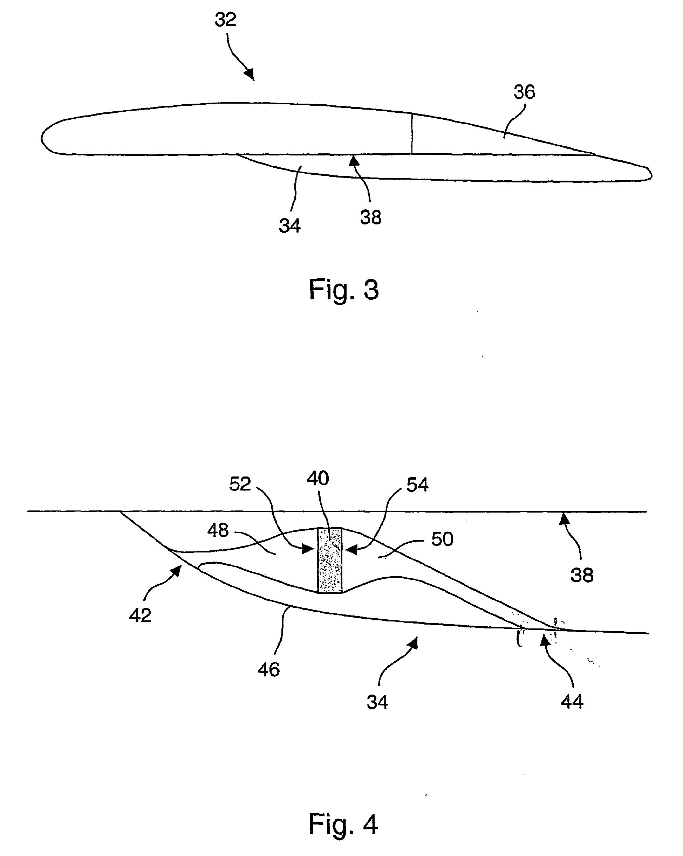

Le système de refroidissement d'un fluide d'un aéronef 30 conforme à l'invention, dont un mode de réalisation est représenté sur la figure 4, comporte un échangeur de chaleur à air 40 traversé par ledit fluide à refroidir. Cet échangeur de chaleur à air 40 est implanté dans un logement situé dans un carénage 34 de rail de guidage de volets 36 associés à une aile 32 de cet aéronef. Des carénages 34 de rail de guidage de volets 36 associés à une aile 32 d'un aéronef sont représentés en vue extérieure sur la figure 2 et en vue en coupe sur la figure 3. De façon connue, des actionneurs non représentés permettent de déplacer ces volets 36 relativement à l'aile 32 de l'aéronef 30 de façon à modifier la configuration aérodynamique dudit aéronef. Lesdits rails de guidage des volets sont généralement situés sous la face inférieure 38 de l'aile 32 et ils sont prévus pour guider le mouvement desdits volets relativement à cette aile sous l'effet desdits actionneurs. A chacun desdits rails de guidage est associé un carénage 34 de façon à ce que ces rails de guidage perturbent le moins possible les caractéristiques aérodynamiques de l'aile 32 de l'aéronef. Conformément à ce mode de réalisation de l'invention, ledit logement dans lequel est implanté l'échangeur de chaleur à air 40 est situé dans un emplacement libre à l'intérieur d'un carénage 34 de rail de guidage de volets. Un moyen d'introduction d'air 52 dans l'échangeur de chaleur à air 40 est raccordé à un moyen d'entrée d'air 42 traversant un revêtement extérieur 46 du carénage 34 dans la partie avant de ce dernier. De même, un moyen d'évacuation d'air 54 de l'échangeur de chaleur à air 40 est raccordé à un moyen de sortie d'air 44 qui débouche à l'extérieur du revêtement extérieur 46 du carénage 34, dans une partie de ce carénage située en arrière dudit moyen d'entrée d'air 42 selon le sens d'avancement de l'aéronef en vol.

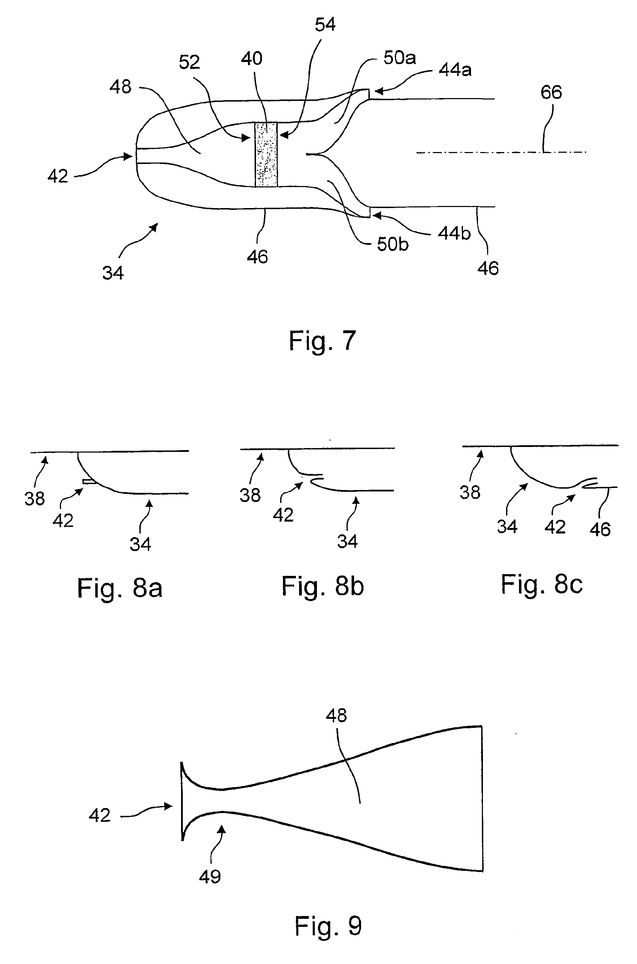

Le moyen d'entrée d'air 42 est une entrée d'air dynamique. Celle-ci peut, par exemple, être du type tube de Pitot, comme représenté sur la figure 8a, qui présente l'avantage de récupérer le maximum de pression dynamique de l'air entrant par ladite entrée d'air. De façon alternative, en fonction des caractéristiques requises quant au débit d'air dans l'échangeur de chaleur 40 et des possibilités d'intégration dans le carénage 34, cette entrée d'air dynamique peut aussi être..d'un type récupérant moins de pression dynamique qu'une entrée d'air de type Pitot, par exemple de type écope comme représenté sur la figure 8b, voire de type noyée dans le revêtement extérieur 46 du carénage 34 (par exemple de type NACA) comme représenté sur la figure 8c.

De façon avantageuse, le moyen d'entrée d'air 42 est raccordé au moyen d'introduction d'air 52 dans l'échangeur de chaleur à air 40 par un conduit divergent 48, c'est à dire dont la section augmente selon le sens de circulation de l'air dudit moyen d'entrée d'air 42 vers ledit moyen d'introduction d'air 52 dans l'échangeur de chaleur à air 40. Inversement, le moyen d'évacuation d'air 54 de l'échangeur de chaleur à air 40 est avantageusement raccordé au moyen de sortie d'air 44 par un conduit convergent 50, c'est à dire dont la section diminue selon le sens de circulation de l'air dudit moyen d'évacuation d'air 54 de l'échangeur de chaleur à air 40 vers ledit moyen de sortie d'air 44. La géométrie divergente/convergente des conduits d'air 48, 50 de part et d'autre de l'échangeur de chaleur 40 permet de réduire la vitesse de l'air traversant cet échangeur de chaleur par rapport à la vitesse de l'air entrant dans le conduit 48, et ainsi de réduire les pertes de charge lorsque l'air traverse cet échangeur de chaleur, ce qui permet de récupérer en sortie du conduit convergent 50 une vitesse de l'air proche de celle de l'écoulement d'air extérieur et par conséquent de diminuer la traînée parasite de la sortie d'air. Lorsque l'air traverse l'échangeur de chaleur 40 et plus particulièrement une matrice d'échange (non représentée) de cet échangeur de chaleur, un transfert de chaleur s'effectue dudit fluide à refroidir vers l'air considéré, la température de ce dernier (généralement inférieure à 0°C lorsque l'aéronef vole en conditions de croisière) étant inférieure à la température du fluide à refroidir (généralement comprise entre 50 et 110°C, dans le cas de fluide hydraulique, lorsque l'aéronef vole en conditions de croisière). La chaleur apportée à l'air lors de la traversée de l'échangeur de chaleur 40 permet de fournir de l'énergie à l'écoulement d'air, ce qui contribue à réduire la traînée du dispositif. Dans le cas idéal où l'effet de cet apport d'énergie est supérieur à l'effet des pertes de charges dues à l'écoulement de l'air dans les conduits 48, 50 et dans l'échangeur de chaleur 40, le dispositif selon l'invention permet même de contribuer à augmenter la poussée de l'aéronef.

De façon avantageuse, le moyen d'entrée d'air 42 est localisé dans la partie avant, selon le sens du vol de l'aéronef, du carénage 34 de rail de guidage des volets 36. Le carénage 34 formant une protubérance sous l'aile 32 de l'aéronef, la distribution de pressions de l'air à la surface de ce carénage 34 est telle que la pression de l'air est maximale sur la partie avant de celui-ci. Cela permet de profiter d'une pression de l'air plus élevée au moyen d'entrée d'air 42 qu'au moyen de sortie d'air 44 (situé à l'arrière dudit moyen d'entrée d'air 42), ce qui contribue au bon fonctionnement du système de refroidissement.

Avantageusement, le moyen de sortie d'air 44 est constitué d'au moins une tuyère orientée dans l'axe de poussée de l'aéronef 30. Cela permet d'une part de perturber au minimum l'aérodynamique de l'aéronef et d'autre part de tirer le meilleur profit de l'éventuelle contribution à la poussée de cet aéronef due audit apport de chaleur à l'air traversant l'échangeur de chaleur 40. De façon avantageuse, cette tuyère 44 est située sur une partie latérale du carénage 34 de rail de guidage des volets. Dans un mode préféré de réalisation représenté sur la figure 7, le conduit convergent 50 comporte au moins deux parties 50a et 50b raccordées, respectivement, à au moins deux tuyères 44a et 44b situées sur des parties latérales du carénage 34 de rail de guidage des volets, ces tuyères 44a, 44b étant respectivement situées de part et d'autre de l'axe longitudinal 66 (partiellement représenté sur la figure 7) dudit du carénage 34 de rail de guidage des volets 36.

Les dimensions du moyen d'entrée d'air 42, du moyen de sortie d'air 44, des conduits 48, 50 et de l'échangeur de chaleur 40 sont déterminées, de façon classique, en fonction des pertes de charge, du débit massique d'air que l'on désire et de la vitesse dynamique de l'écoulement de manière à ce que dans les phases de vol considérées le débit d'air frais passant dans l'échangeur de chaleur 40 permette d'assurer la capacité d'échange thermique requise pour le refroidissement du fluide. Dans un mode préféré de réalisation, lesdites phases de vol considérées correspondent au vol de croisière de l'aéronef.

Dans un mode préféré de réalisation, le conduit divergent 48 comporte un col 49 comme représenté sur la figure 9. Ce col 49 est situé entre le moyen d'entrée d'air 42 et la partie divergente du conduit 48. Il correspond à une partie dudit conduit 48 dans laquelle la section de passage de l'air est minimale. Ce col 49 permet de fixer le débit massique d'air dans le conduit divergent 48 par blocage sonique : de façon connue, la vitesse de l'air dans le col 49 est au maximum égale à la vitesse du son. Il en résulte que lorsque l'aéronef vole en phase de croisière, ladite vitesse de l'air dans le col 49 est égale à la vitesse du son. Le dimensionnement de ce col 49 est calculé, de façon classique, pour limiter le débit d'air dans le conduit divergent 48 à une valeur permettant de respecter une vitesse maximale de l'air dans l'échangeur de chaleur 40, déterminée en fonction des pertes de charge que l'on ne souhaite pas dépasser. Une autre limitation du débit d'air peut être déterminée de façon à limiter la traînée aérodynamique induite par ledit système de refroidissement d'un fluide de l'aéronef au-dessous d'une valeur maximale prédéfinie.

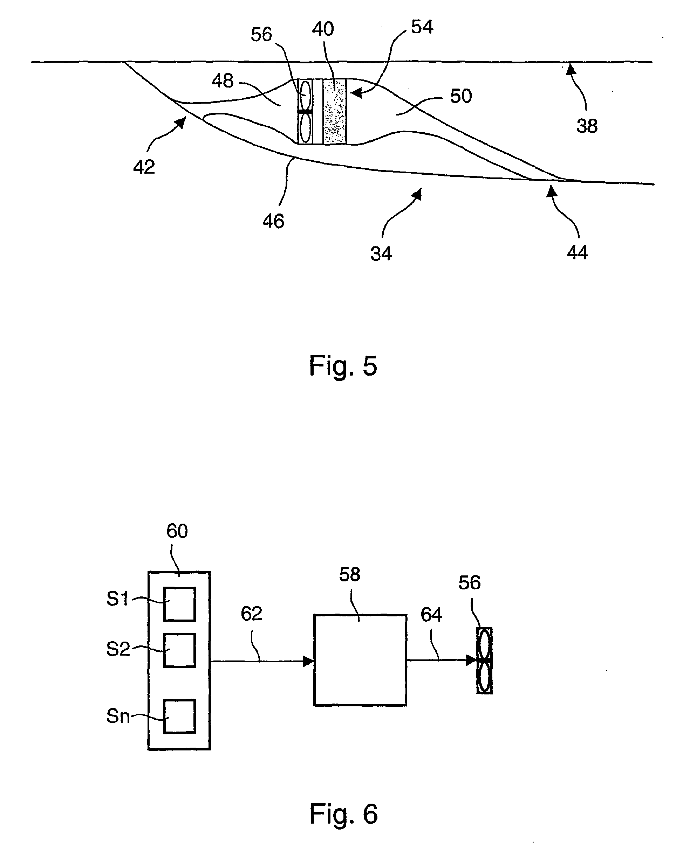

Dans un mode particulier de réalisation représenté sur la figure 5, le système de refroidissement objet de l'invention comporte au moins un ventilateur 56. Le fonctionnement de ce ventilateur 56 permet d'assurer et d'augmenter le débit d'air dans l'échangeur de chaleur 40, notamment lorsque la vitesse de l'aéronef est nulle (aéronef au sol) ou inférieure à un valeur prédéterminée (par exemple dans les phases de décollage et d'atterrissage). Ainsi, lorsque le système de refroidissement objet de l'invention est dimensionné pour assurer le refroidissement dudit fluide dans les phases de vol de croisière de l'aéronef, l'utilisation de ce ventilateur permet d'assurer le refroidissement dudit fluide dans toutes les phases d'utilisation de l'aéronef. Ledit système de refroidissement comportant un ventilateur 56 présente l'avantage d'avoir une masse moindre que celle d'un système de refroidissement qui serait dimensionné pour assurer le refroidissement de ce fluide sans ventilateur dans des phases de vol de l'aéronef correspondant à une vitesse inférieure à la vitesse de croisière de cet aéronef. Il présente aussi l'avantage, par rapport à un système sans ventilateur, de permettre le refroidissement dudit fluide même lorsque l'aéronef fonctionne au sol à vitesse nulle. Le ventilateur 56 peut être placé en amont, selon le sens de circulation de l'air, de l'échangeur de chaleur 40 (figure 5), ou en aval de cet échangeur de chaleur 40. Il peut être, notamment, à actionnement électrique ou hydraulique. De façon avantageuse, comme représenté sur la figure 6, ce ventilateur 56 est relié, par une liaison 64, à des moyens de commande 58 qui comportent au moins une entrée reliée à un ensemble 60 de sources d'information S1, S2, ..., Sn par au moins une liaison 62. Ces sources d'informations peuvent notamment être des capteurs ou des calculateurs de l'aéronef. Avantageusement, les informations fournies par les sources d'informations S1, S2, ..., Sn peuvent notamment correspondre à la température du fluide à refroidir et/ou à la vitesse aérodynamique de l'aéronef. Dans ce cas, les moyens de commande 58 arrêtent le fonctionnement du ventilateur 56 lorsque la température du fluide est inférieure à une valeur prédéterminée Tmin afin de ne pas refroidir ce fluide de façon excessive ou lorsque la vitesse aérodynamique de l'aéronef est supérieure à une valeur prédéterminée Vmin afin de ne pas emballer ledit ventilateur. Lorsque la température du fluide est supérieure à ladite valeur prédéterminée Tmin et/ou que la vitesse aérodynamique de l'aéronef est inférieure à ladite valeur prédéterminée Vmin, les moyens de commande 58 activent le fonctionnement du ventilateur 56 de façon à forcer la circulation de l'air dans l'échangeur de chaleur 40. Un tel mode de fonctionnement présente l'avantage de permettre un refroidissement suffisant du fluide dans des phases de vol autres que celles (correspondant par exemple aux phases de vol de croisière) pour lesquelles le dimensionnement du système de refroidissement a été dimensionné. On peut par exemple choisir une valeur de Vmin supérieure à la vitesse de décollage et inférieure à la vitesse de croisière. Dans une variante de ce mode de réalisation, les moyens de commande 58 pilotent le ventilateur 56 avec une vitesse variable décroissante lorsque la vitesse aérodynamique de l'aéronef augmente, de façon à ce que le ventilateur 56 ne soit pas piloté (vitesse nulle) lorsque la vitesse aérodynamique de l'aéronef est supérieure à Vmin. Dans une autre variante de ce mode de réalisation, les moyens de commande 58 pilotent le ventilateur 56 en fonction de la température du fluide à refroidir, soit selon une régulation en tout ou rien, soit avec une vitesse variable décroissante lorsque la température du fluide diminue. Ces deux variantes de réalisation peuvent aussi être combinées entre elles.

En variante, il est possible de disposer plusieurs ventilateurs 56 en parallèle de façon à augmenter la disponibilité de l'échangeur de chaleur en cas de panne de l'un des ventilateurs 56 . Dans le cas précité où le conduit convergent 50 comporte deux parties 50a et 50b raccordées respectivement aux deux tuyères 44a et 44b, il est possible de disposer un ventilateur 56 à l'entrée de chacune desdites parties 50a et 50b dudit conduit 50, le terme entrée étant ici employé par rapport au sens d'écoulement de l'air lorsque l'aéronef 30 est en vol.

L'invention concerne aussi un aéronef 30 comportant au moins un système de refroidissement d'un fluide tel que décrit précédemment. Par exemple, l'aéronef 30 peut comporter au moins un tel système de refroidissement dans plusieurs carénages 34 de rail de guidage de volets 36 de cet aéronef 30, de façon à maximiser la puissance de refroidissement de fluide(s) de l'aéronef 30 et/ou de couvrir les besoins de refroidissement de fluides correspondant à des circuits distincts de l'aéronef 30.

Dans un mode particulier de réalisation, l'aéronef 30 comporte au moins un circuit de fluide hydraulique dont le fluide hydraulique est refroidi par ledit ou lesdits systèmes de refroidissement. De façon préférée, ledit fluide hydraulique traversant l'échangeur de chaleur à air 40 est issu de la canalisation de drainage 20 d'au moins une pompe hydraulique 12. Ce mode de réalisation présente l'avantage de n'envoyer vers l'échangeur de chaleur 40 que la partie du fluide hydraulique ayant subi l'élévation de température la plus importante, d'où une meilleure efficacité du système de refroidissement.

## Revendications

1. Système de refroidissement d'un fluide d'un aéronef (30) comportant un échangeur de chaleur à air (40) traversé par ledit fluide, ledit échangeur de chaleur à air (40) comprenant un moyen d'introduction d'air (52) et un moyen d'évacuation d'air (54), ledit échangeur de chaleur à air (40) étant implanté dans un logement situé dans un carénage (34), ledit moyen d'introduction d'air (52) dans l'échangeur de chaleur à air (40) étant raccordé à un moyen d'entrée d'air (42) et ledit moyen d'évacuation d'air (54) de cet échangeur de chaleur à air étant raccordé à un moyen de sortie d'air (44) débouchant à l'extérieur du revêtement extérieur (46) du carénage de façon à ce que de l'air extérieur à l'aéronef (30) traverse ledit échangeur de chaleur à air (40) pour refroidir ledit fluide, **caractérisé en ce que** ledit logement est situé dans un carénage de rail de guidage de volets (36) associés à une aile (32) dudit aéronef (30) et **en ce que** ledit moyen d'entrée d'air traverse le revêtement extérieur (46) du carénage (34).

2. Système selon la revendication 1, **caractérisé en ce que** ledit moyen d'entrée d'air (42) est raccordé au moyen d'introduction d'air (52) de l'échangeur de chaleur à air (40) par un conduit divergent (48) dont la section augmente selon le sens de circulation de l'air dudit moyen d'entrée d'air (42) vers ledit moyen d'introduction d'air (52) de l'échangeur de chaleur à air (40).

3. Système selon la revendication 1 ou 2, **caractérisé en ce que** ledit moyen d'évacuation d'air (54) de l'échangeur de chaleur à air (40) est raccordé audit moyen de sortie d'air (44) par un conduit convergent (50) dont la section diminue selon le sens de circulation de l'air dudit moyen d'évacuation d'air (54) de l'échangeur de chaleur à air (40) vers ledit moyen de sortie d'air (44).

4. Système selon l'une quelconque des revendications précédentes, **caractérisé en ce que** le moyen d'entrée d'air (42) correspond à une entrée d'air dynamique.

5. Système selon la revendication 4, **caractérisé en ce que** ledit moyen d'entrée d'air (42) est une prise d'air de type tube de Pitot.

6. Système selon la revendication 4, **caractérisé en ce que** ledit moyen d'entrée d'air (42) est une prise d'air de type écope.

7. Système selon la revendication 4, **caractérisé en ce que** ledit moyen d'entrée d'air (42) est une prise d'air de type noyé dans le revêtement extérieur (46) du carénage (34).

8. Système selon l'une quelconque des revendications précédentes, **caractérisé en ce que** le moyen d'entrée d'air (42) est situé en partie avant du carénage (34) de rail de guidage des volets (36).

9. Système selon l'une quelconque des revendications précédentes, **caractérisé en ce que** le moyen de sortie d'air (44) est constitué d'au moins une tuyère (44, 44a, 44b) orientée dans l'axe de poussée de l'aéronef (30).

10. Système selon la revendication 9, **caractérisé en ce que** ladite tuyère (44, 44a, 44b) est située sur une partie latérale du carénage (34) de rail de guidage des volets (36).

11. Système selon la revendication 9 ou 10, **caractérisé en ce qu'**il comporte au moins deux tuyères (44a, 44b) situées sur des parties latérales du carénage (34) de rail de guidage des volets (36).

12. Système selon l'une quelconque des revendications 2 à 11, **caractérisé en ce que** le conduit divergent (48) comporte un col (49) apte à limiter le débit d'air dans ledit conduit divergent (48) dans les phases de vol de croisière.

13. Système selon l'une quelconque des revendications précédentes, **caractérisé en ce que** son dimensionnement est prévu pour assurer le refroidissement dudit fluide lorsque l'aéronef (30) vole en conditions de croisière.

14. Système selon l'une quelconque des revendications précédentes, **caractérisé en ce qu'**il comporte au moins un ventilateur (56) apte à assurer un débit d'air minimal dans l'échangeur de chaleur à air (40)

15. Système selon l'une quelconque des revendications précédentes, **caractérisé en ce qu'**il comporte un ventilateur (56) implanté en amont de l'échangeur de chaleur à air (40).

16. Système selon l'une quelconque des revendications 1 à 14, **caractérisé en ce qu'**il comporte un ventilateur (56) implanté en aval de l'échangeur de chaleur à air (40).

17. Système selon l'une quelconque des revendications 14 à 16, **caractérisé en ce qu'**il comporte des moyens de commande (58) dudit ventilateur (56) qui activent ce ventilateur (56) lorsque la vitesse aérodynamique de l'aéronef (30) est inférieure à une valeur prédéterminée.

18. Système selon l'une quelconque des revendications 14 à 17, **caractérisé en ce qu'**il comporte des moyens de commande (58) dudit ventilateur (56) qui activent ce ventilateur (56) lorsque la température du fluide à refroidir est supérieure à une valeur prédéterminée.

19. Système selon l'une quelconque des revendications 14 à 18, **caractérisé en ce qu'**il comporte des moyens de commande (58) dudit ventilateur (56) qui commandent ce ventilateur (56) avec une vitesse variable qui décroît lorsque la vitesse aérodynamique de l'aéronef (30) augmente.

20. Système selon l'une quelconque des revendications 14 à 19, **caractérisé en ce qu'**il comporte des moyens de commande (58) dudit ventilateur (56) qui commandent ce ventilateur (56) avec une vitesse variable qui décroît lorsque la température du fluide à refroidir diminue.

21. Système selon l'une quelconque des revendications 14 à 20, **caractérisé en ce qu'**il comporte plusieurs ventilateurs (56) disposés en parallèle.

22. Aéronef (30) **caractérisé en ce qu'**il comporte au moins un système de refroidissement d'un fluide tel que celui spécifié sous l'une quelconque des revendications 1 à 21.

23. Aéronef (30) **caractérisé en ce qu'**il comporte au moins un système de refroidissement d'un fluide, tel que celui spécifié sous l'une quelconque des revendications 1 à 21, dans plusieurs carénages (34) de rails de guidage des volets (36) associés aux ailes (32) dudit aéronef (30).

24. Aéronef (30) selon la revendication 22 ou 23 **caractérisé en ce qu'**il comporte au moins un circuit de fluide hydraulique dont le fluide hydraulique est refroidi par ledit au moins un système de refroidissement.

25. Aéronef (30) selon la revendication 24 **caractérisé en ce que** ledit fluide hydraulique traversant l'échangeur de chaleur à air (40) est issu d'une canalisation de drainage (20) d'au moins une pompe hydraulique (12).

## Claims

1. An aircraft (30) fluid cooling system, comprising an air heat exchanger (40) passed through by said fluid, said air heat exchanger (40) including a means for the introduction of air (52) and an air exhaust means (54), said air heat exchanger (40) being installed in a housing located in a fairing (34), said means for the introduction of air (52) in the air heat exchanger (40) being connected to an air inlet means (42), and said air exhaust means (54) of this air heat exchanger being connected to an air output means (44) opening outside the outer surface (46) of the fairing in order that the air outside the aircraft (30) passes through said air heat exchanger (40) to cool said fluid, **characterized in that** said recess is located in a fairing of a guide rail of flaps (36) connected to one wing (32) of said aircraft (30) and **in that** said air inlet means crosses the outer surface (46) of fairing (34).

2. A system according to claim 1, **characterized in that** said air inlet means (42) is connected to the means for the introduction of air (52) of the air heat exchanger (40) by a divergent duct (48) whose section increases according to the direction of circulation of the air in said air inlet means (42) towards said means for the introduction of air (52) of the air heat exchanger (40).

3. A system according to claim 1 or 2, **characterized in that** said air exhaust means (54) of the air heat exchanger (40) is connected to said air output means (44) by a convergent duct (50) whose section decreases according to the direction of circulation of the air in said air exhaust means (54) of the air heat exchanger (40) towards said air output means (44).

4. A system according to any of the previous claims, **characterised in that** said air inlet means (42) corresponds to a ram air intake.

5. A system according to Claim 4, **characterised in that** said air inlet means (42) is a Pitot tube air intake.

6. A system according to Claim 4, **characterised in that** said air inlet means (42) is a scoop air intake.

7. A system according to Claim 4, **characterised in that** said air inlet means (42) is an air intake embedded in the outer surface (46) of the fairing (34).

8. A system according to any of the previous claims, **characterised in that** said air inlet means (42) is located in the forward part of the flap (36) guide rail fairing (34).

9. A system according to any of the previous claims, **characterised in that** said air output means (44) is made up of at least one nozzle (44, 44a, 44b) positioned in the thrust axis of the aircraft (30).

10. A system according to Claim 9, **characterised in that** said nozzle (44, 44a, 44b) is located on a lateral part of the flap (36) guide rail fairing (34).

11. A system according to Claim 9 or 10, **characterised in that** it has at least two nozzles (44a, 44b) located on lateral parts of the flap (36) guide rail fairing (34).

12. A system according to any of Claims 2 to 11, **characterised in that** said divergent duct (48) has a neck (49) to limit the throughput of air in said divergent duct (48) in the cruise flight phases.

13. A system according to any of the previous claims, **characterised in that** its dimensioning is provided to ensure the cooling of said fluid when the aircraft (30) is flying under cruise conditions.

14. A system according to any of the previous claims, **characterised in that** it has at least one fan (56) to ensure a minimal throughput of air in the air heat exchanger (40).

15. A system according to any of the previous claims, **characterised in that** it has a fan (56) installed upstream of the air heat exchanger (40).

16. A system according to any of Claims 1 to 14, **characterised in that** it has a fan (56) installed downstream of the air heat exchanger (40).

17. A system according to any of Claims 14 to 16, **characterised in that** it has control means (58) for controlling said fan (56) which activate this fan (56) when the airspeed of the aircraft (30) is below a predetermined value.

18. A system according to any of Claims 14 to 17, **characterised in that** it has control means (58) for controlling said fan (56) which activate this fan (56) when the temperature of the fluid to be cooled is greater than a predetermined value.

19. A system according to any of Claims 14 to 18, **characterised in that** it has control means (58) for controlling said fan (56) which control this fan (56) with a variable speed which decreases when the airspeed of the aircraft (30) increases.

20. A system according to any of Claims 14 to 19, **characterised in that** it has control means (58) for controlling said fan (56) which control this fan (56) with a variable speed which decreases when the temperature of the fluid to be cooled decreases.

21. A system according to any of Claims 14 to 20, **characterised in that** it has several fans (56) arranged in parallel.

22. An aircraft (30) **characterised in that** it has at least one fluid cooling system such as that claimed in any of Claims 1 to 21.

23. An aircraft (30) **characterised in that** it has at least one fluid cooling system, such as that claimed in any of Claims 1 to 21, in several flap (36) guide rail fairings (34) connected to the wings (32) of said aircraft (30).

24. An aircraft (30) according to Claim 22 or 23 **characterised in that** it has at least one hydraulic fluid circuit in which the hydraulic fluid is cooled by said at least one fluid cooling system.

25. An aircraft (30) according to Claim 24 **characterised in that** said hydraulic fluid passing through the air heat exchanger (40) is from a drainage pipe (20) of at least one hydraulic pump (12).

## Patentansprüche

1. Kühlsystem für ein Fluid eines Luftfahrzeugs (30), mit einem Luft-Wärmetauscher (40), der von dem Fluid durchströmt wird, wobei der Luft-Wärmetauscher (40) ein Luft-Einleitmittel (52) und ein Luft-Austragungsmittel (54) umfasst, der Luft-Wärmetauscher (40) in einem Sitz untergebracht ist, welcher sich in einem Verkleidungsteil (34) befindet, wobei das Luft-Einleitmittel (52) in dem Luft-Wärmetauscher (40) mit einem Luft-Einlassmittel (42) verbunden ist, und das Luft-Austragungsmittel (54) dieses Luft-Wärmetauschers (40) mit einem Luft-Auslassmittel (44) verbunden ist, welches an der Außenseite der Außenverkleidung (46) des Verkleidungsteils mündet, so dass die Außenluft des Luftfahrzeugs (30) den Luft-Wärmetauscher (40) durchströmt, um das Fluid zu kühlen, **dadurch gekennzeichnet, dass** sich der Sitz in einem Verkleidungsteil von Führungsschienen von einem Flügel (32) des Luftfahrzeugs (30) zugeordneten Luftklappen (36) befindet, und dass das Luft-Einlassmittel die Außenverkleidung (46) des Verkleidungsteils (34) durchsetzt.

2. System nach Anspruch 1, wobei das Luft-Einlassmittel (42) mit dem Luft-Einleitmittel (52) des Luft-Wärmetauschers (40) durch eine divergierende Leitung (48) verbunden ist, deren Querschnitt in der Zirkulationsrichtung der Luft des Luft-Einlassmittels (42) zu dem Luft-Einleitmittel (52) des Luft-Wärmetauschers (40) hin zunimmt.

3. System nach Anspruch 1 oder 2, **dadurch gekennzeichnet, dass** das Luft-Austragungsmittel (54) des Luft-Wärmetauschers (40) mit dem Luft-Auslassmittel (44) durch eine konvergierende Leitung (50) verbunden ist, deren Querschnitt in der Zirkulationsrichtung der Luft des Luft-Austragungsmittels (54) des Luft-Wärmetauschers (40) zu dem Luft-Auslassmittel (44) hin abnimmt.

4. System nach einem der vorangehenden Ansprüche, **dadurch gekennzeichnet, dass** das Luft-Einlassmittel (42) einem dynamischen Luft-Einlass entspricht.

5. System nach Anspruch 4, **dadurch gekennzeichnet, dass** das Luft-Einlassmittel (42) ein Luft-Einlass vom Pitot-Röhrentyp ist.

6. System nach Anspruch 4, **dadurch gekennzeichnet, dass** das Luft-Einlassmittel (42) ein Luft-Einlass vom Schaufeltyp ist.

7. System nach Anspruch 4, **dadurch gekennzeichnet, dass** das Luft-Einlassmittel (42) ein Luft-Einlass vom in der Außenverkleidung (46) des Verkleidungsteils (34) versenkten Typ ist.

8. System nach einem der vorangehenden Ansprüche, **dadurch gekennzeichnet, dass** das Luft-Einlassmittel (42) sich teilweise vor dem Verkleidungsteil (34) der Führungsschiene der Luftklappen (36) befindet.

9. System nach einem der vorangehenden Ansprüche, **dadurch gekennzeichnet, dass** das Luft-Auslassmittel (44) aus mindestens einer Düse (44,44a,44b) gebildet ist, die entlang der Schubachse des Luftfahrzeugs (30) ausgerichtet ist.

10. System nach Anspruch 9, **dadurch gekennzeichnet, dass** die Düse (44,44a,44b) sich an einem seitlichen Abschnitt des Verkleidungsteils (34) der Führungsschiene der Luftklappen (36) befindet.

11. System nach Anspruch 9 oder 10, **dadurch gekennzeichnet, dass** es mindestens zwei Düsen (44a,44b) umfasst, die sich an den seitlichen Abschnitten des Verkleidungsteils (34) der Führungsschiene der Luftklappen (36) befinden.

12. System nach einem der Ansprüche 2 bis 11, **dadurch gekennzeichnet, dass** die divergierende Leitung (48) einen Kragen (49) aufweist, welcher den Luftdurchsatz in der divergierenden Leitung (48) in den Flugphasen begrenzen kann.

13. System nach einem der vorangehenden Ansprüche, **dadurch gekennzeichnet, dass** seine Dimensionierung derart vorgesehen ist, dass die Kühlung des Fluids sichergestellt ist, wenn sich das Luftfahrzeug (30) im Flugzustand befindet.

14. System nach einem der vorangehenden Ansprüche, **dadurch gekennzeichnet, dass** es mindestens einen Ventilator (56) umfasst, der einen minimalen Luftdurchsatz in dem Luft-Wärmetauscher (40) sicherstellen kann.

15. System nach einem der vorangehenden Ansprüche, **dadurch gekennzeichnet, dass** es einen Ventilator (56) umfasst, der stromauf des Luft-Wärmetauschers (40) angebracht ist.

16. System nach einem der Ansprüche 1 bis 14, **dadurch gekennzeichnet, dass** es einen Ventilator (56) umfasst, der stromab des Luft-Wärmetauschers (40) angebracht ist.

17. System nach einem der Ansprüche 1 bis 16, **dadurch gekennzeichnet, dass** es Steuermittel (58) des Ventilators (56) umfasst, welche diesen Ventilator (56) in Gang setzen, wenn die aerodynamische Geschwindigkeit des Luftfahrzeugs (30) unter einem vorbestimmten Wert liegt.

18. System nach einem der Ansprüche 14 bis 17, **dadurch gekennzeichnet, dass** es Steuermittel (58) des Ventilators (56) umfasst, welche diesen Ventilator (56) in Gang setzen, wenn die Temperatur des zu kühlenden Fluids über einem vorbestimmten Wert liegt.

19. System nach einem der Ansprüche 14 bis 18, **dadurch gekennzeichnet, dass** es Steuermittel (58) des Ventilators (56) umfasst, die diesen Ventilator (56) mit einer variablen Geschwindigkeit steuern, welche abnimmt, wenn die aerodynamische Geschwindigkeit des Luftfahrzeugs (30) zunimmt .

20. System nach einem der Ansprüche 14 bis 19, **dadurch gekennzeichnet, dass** es Steuermittel (58) des Ventilators (56) umfasst, die diesen Ventilator (56) mit einer variablen Geschwindigkeit steuern, welche abnimmt, wenn die Temperatur des zu kühlenden Fluids sinkt.

21. System nach einem der Ansprüche 14 bis 20, **dadurch gekennzeichnet, dass** es mehrere parallel angeordnete Ventilatoren (56) umfasst.

22. Luftfahrzeug (30), **dadurch gekennzeichnet, dass** es mindestens ein Kühlsystem eines Fluids, wie es in einem der Ansprüche 1 bis 21 spezifiziert ist, umfasst.

23. Luftfahrzeug (30), **dadurch gekennzeichnet, dass** es mindestens ein Kühlsystem eines Fluids, wie es in einem der Ansprüche 1 bis 21 spezifiziert ist, in mehreren Verkleidungsteilen (34) von Führungsschienen der den Flügeln (32) des Luftfahrzeugs (30) zugeordneten Luftklappen (36) umfasst.

24. Luftfahrzeug (30) nach Anspruch 22 oder 23, **dadurch gekennzeichnet, dass** es mindestens einen hydraulischen Fluidkreislauf umfasst, dessen Hydraulikfluid von dem mindestens einen Kühlsystem gekühlt wird.

25. Luftfahrzeug (30) nach Anspruch 24, **dadurch gekennzeichnet, dass** das Hydraulikfluid, welches den Luft-Wärmetauscher (40) durchströmt, aus einer Drainageleitung (20) mindestens einer Hydraulikpumpe (12) kommt.
